# EUROPEAN PATENT SPECIFICATION

(11) **EP 3 676 454 B1**
(45) Date of publication and mention of the grant of the patent: **01.12.2021**
(21) Application number: 17757769.9
(22) Date of filing: 28.08.2017
(51) Int. Cl.: E02F 9/20, B60L 50/50, B60W 20/00, E02F 9/22, E02F 3/42

(54) **A DRIVE SYSTEM AND A METHOD FOR CONTROLLING A DRIVE SYSTEM OF A HYBRID WORKING MACHINE**
ANTRIEBSSYSTEM UND VERFAHREN ZUR STEUERUNG EINES ANTRIEBSSYSTEMS EINER HYBRIDEN ARBEITSMASCHINE
SYSTÈME D'ENTRAÎNEMENT ET PROCÉDÉ DE COMMANDE D'UN SYSTÈME D'ENTRAÎNEMENT D'UNE MACHINE DE TRAVAIL HYBRIDE

(43) Date of publication of application: 08.07.2020
(73) Proprietor: Volvo Construction Equipment AB, 631 85 Eskilstuna (SE)
(72) Inventor: UEBEL, Karl, 635 31 Kvicksund (SE)
(74) Representative: Kransell & Wennborg KB
(86) International application number: PCT/EP2017/071486
(87) International publication number: WO 2019/042522

(56) References cited:
- EP-A2- 0 104 613
- WO-A2-2007/115247
- WO-A2-2009/088406
- US-A- 5 720 358
- US-A1- 2010 332 061
- US-A1- 2013 317 684
- US-A1- 2014 026 550

## Description

### TECHNICAL FIELD

The invention relates to a drive system and a method for controlling a drive system of a working machine. In particular, the method and system relates to a hybrid drive system comprising an internal combustion engine and an energy storage.

The invention is applicable on working machines within the fields of industrial construction machines or construction equipment, in particular wheel loaders. Although the invention will be described with respect to a wheel loader, the invention is not restricted to this particular machine, but may also be used in other working machines such as articulated haulers, excavators and backhoe loaders.

### BACKGROUND

In connection with transportation of heavy loads, e.g. in construction work, work machines are frequently used. A work machine may be operated with large and heavy loads in areas where there are no roads, for example for transports in connection with road or tunnel building, sand pits, mines and similar environments.

A work machine is often used in a repeated work cycle. The term "work cycle" comprises a route of the work machine (i.e. the work cycle travel path) and a movement of a work implement, such as a bucket, (lifting/lowering operation). The work cycle is repeated in the same geographical area. During the performance of the work cycle, the work machine often encounters different gradients of the ground (uphill and downhill), and turns (cornering).

To improve the fuel efficiency of the working machine, a hybrid drive system comprising an energy storage can be used. For example, a hydraulic hybrid system consists of a pump/motor attached to the gearbox and hydraulic system based on hydraulic accumulators and control valves. The energy storage system can be charged when excess energy is available, for example during braking by producing the braking torque with the pump/motor and charging the accumulator with pressurized oil. The energy can then later on be reused.

The typical wheel loader operation includes simultaneous operation with the two main subsystems of the motion system - driveline and work hydraulics. Since both systems are directly coupled to the engine shaft the interaction of the systems can be problematic. When improving one subsystem the other might be negatively affected, for instance driving the bucket harder into a gravel pile makes it more difficult to lift. By introducing an add-on Energy Storage System (ESS) to the driveline the complete motion system must be considered in the control strategy.

US2010/0332061 discloses a method and a system for controlling a working machine comprising an energy storage. In particular, US2010/0332061 describes a control strategy for a working machine during operation in a repeated work cycle, where the transfer of energy from the energy storage is adapted for characteristics of the work cycle.

However, it is desirable to further improve the efficiency of a hybrid drive system.

### SUMMARY

An object of the invention is to provide a method and a system for controlling a drive system in a working machine, where the drive system comprises a torque converter operatively coupled between the combustion engine and the gearbox.

The object is achieved by a method according to claim 1.

According to a first aspect of the invention, there is provided a method for controlling a hybrid drive system in a working machine. The system comprises an internal combustion engine, a torque converter having an input shaft operatively coupled to the engine and an output shaft operatively coupled to a gearbox, an energy storage system operatively coupled to the gearbox for providing power to and receiving power from a drive shaft via the gearbox, the drive shaft being operatively coupled to propulsion means of the working machine, and work hydraulics operatively connected to the engine. The method comprises identifying a repetitive loading cycle of the working machine; detecting a bucket fill action in the repetitive loading cycle. The method further comprises, during the bucket fill action, discharging the energy storage system to provide a majority of the energy stored in the energy storage system to the drive shaft for vehicle propulsion.

A repetitive loading cycle of a working machine is an operational mode where a certain work cycle comprising a loading maneuverer is performed repeatedly. Such a work cycle may comprise a plurality of different actions, such as a bucket-fill action. A repetitive loading cycle of a working machine can be identified in a number of different ways, such as by tracking the path of the working machine using a GPS system and by monitoring operating parameters of the working machine such as linkage movements, bucket movements and linkage forces. A repetitive loading cycle of a working machine can also be identified by monitoring the velocity of the working machine.

Detecting a bucket-fill action of the working machine may for example comprise detecting a kick-down operation of the working machine. A kick-down operation may be initiated by the vehicle operator, by activating a dedicated a kick down control. A kick down-action may also be detected by monitoring the throttle and vehicle velocity to determine if a kick-down operation is executed. It is also possible to monitor other vehicle parameters to determine if a bucket fill action is performed. Such vehicle parameters may for example comprise linkage position, bucket position, forces in the linkage, etc.

To discharge the majority of the energy stored in the energy storage system should be interpreted to mean that the state of charge of an energy storage in the energy storage system is reduced by at least 50% during the described discharging phase. The state of charge of the energy storage system may thus be at any level before discharging, and the control method controls the energy storage to discharge at least half of the energy which is available.

By the provision of the described method which comprises discharging a majority of the energy stored in the energy storage during a bucket fill action, a more energy efficient operation of a working machine can be achieved, improving the fuel efficiency of the working machine. The total amount of energy generated by the internal combustion engine can in the present system be divided into three main parts: combustion engine losses, mechanical energy provided to work hydraulics, and mechanical energy provided to the torque converter to be further provided to propulsion means of the working machine for vehicle propulsion. The present disclosure is aimed at reducing the energy losses occurring in the torque converter and to improve the overall fuel efficiency of the working machine. Energy losses in the torque converter are associated with the torque converter slip, i.e. with the difference in rotational speed of the input shaft and output shaft of the torque converter. Accordingly, it is desirable to minimize the energy provided from the combustion engine for vehicle propulsion during operations where the torque converter exhibits a high torque converter slip. During a bucket fill action in a work cycle, the working machine lowers the bucket and drives into a pile of material. Driving into the pile of material typically requires a large torque on the drive shaft for vehicle propulsion, at a low speed of the working machine, which results in a large difference in speed of the input shaft and output shaft of the torque converter. Accordingly, the bucket fill action has been identified as an action where the torque converter typically operates with a high slip, i.e. with high energy losses in the torque converter. Therefore, the described control method ensures that the energy storage system is utilized during an identified bucket fill action. By using energy from the energy storage system during the bucket fill action, the energy required for vehicle propulsion drawn from the combustion engine, via the torque converter, is reduced and that the speed of the engine can be reduced as a result of the reduced energy requirement. Thereby, the energy losses in the torque converter are reduced and the energy efficiency and overall fuel efficiency of the working machine is improved.

According to one embodiment of the invention, the step of discharging the energy storage system comprises providing energy from the energy storage system for vehicle propulsion only during the bucket fill action. Thereby, it can be ensured that the energy storage is only used in situations with high energy loss in the torque converter. Accordingly, the energy storage is not used unless it can be ensured that the energy is used efficiently, thus improving the overall energy efficiency of the working machine throughout a work cycle.

According to one embodiment of the invention, the method may further comprise: determining that the working machine is not in the repetitive loading cycle; identifying an action where a torque converter slip is higher than a predetermined threshold value; and providing energy from the energy storage system to the drive shaft for propulsion of the vehicle during said identified action. Thereby, the described control method can be extended such that the energy storage can be used to improve the energy efficiency also during an action which is not the specified bucket fill action.

According to one embodiment of the invention, the predetermined threshold value for the torque converter slip may be 50%. Since the torque converter slip is defined as the difference in rotational speed of the input shaft and output shaft of the torque converter, a torque converter slip of 50% means that the output shaft of the torque converter rotates at half the speed of the input shaft of the torque converter. The relation between torque converter slip and energy losses in the torque converter can be considered to be known, and the threshold value can be set based on the known properties of the torque converter to achieve an improvement in fuel efficiency resulting from the power provided by the energy storage.

According to one embodiment of the invention, the method may further comprise providing power for vehicle propulsion based on a predetermined amount of energy to be provided from the energy storage system for vehicle propulsion, determining a torque converter slip, and determining an engine speed based on the torque converter slip such that the power from the engine and the power from the energy storage system equals the requested power for vehicle propulsion.

Thereby, based on known properties of the energy storage system, the speed of the combustion engine can be determined based on the amount of power to be provided from the energy storage system for vehicle propulsion. In particular, by further determining the current torque converter slip, the engine speed, i.e. engine rpm, can be minimized so that only the required power is provided via the torque converter. Accordingly, torque converter losses are minimized and the fuel efficiency is improved by means of the energy storage and the described control method. The predetermined amount of energy to be provided from the energy storage may for example be 50% of the total available energy, preferably 70% and more preferably 90% of the total available energy. It should be noted that the improvement in fuel efficiency for high torque converter slip operations is correlated to the amount of energy provided from the energy storage system, thereby making it desirable to provide as much energy as possible from the energy storage during operations with high torque converter slip.

According to one embodiment of the invention, the predetermined amount of energy to be provided from the energy storage system may be the maximum available energy in the energy storage system. Thereby, the highest possible reduction of torque converter losses, and thereby the largest improvement in fuel efficiency, can be achieved, assuming that all of the energy in the energy storage can be used for vehicle propulsion.

According to one embodiment of the invention, the method may further comprise determining a required hydraulic fluid flow and output torque for the work hydraulics, determining a minimum required engine speed of the internal combustion engine for providing the required hydraulic fluid flow and output torque to the work hydraulics, and maintaining the engine speed above the determined minimum required engine speed. Hereby, the engine speed is not reduced below the point where it can no longer provide the required power for the work hydraulics, even if the available energy in the energy storage is sufficient to provide additional power for vehicle propulsion.

According to one embodiment of the invention, discharging the energy storage system may comprise maintaining an amount of stored energy above a predetermined lower threshold value after completing the discharging operation. There may be situations and actions during a work cycle other than the above specified discharging operation where it is advantageous to use energy from the energy storage. Thereby, a certain amount of energy is saved also after the described discharging. Moreover, an energy storage which is completely empty may also be less energy efficient to charge, thereby, not all of the energy of the energy storage is discharged. Furthermore, in a hydraulic energy storage system, discharging a hydraulic accumulator below a certain pre-charge pressure may also increase wear of the components in the energy storage system.

According to one embodiment of the invention, the predetermined lower threshold value of stored energy after a discharge action is set based on an expected required braking torque during a remainder of the repetitive-cycle loading work cycle, not including the bucket fill action. The stored energy in a hydraulic accumulator is approximately proportional to the pressure in the accumulator, and a higher accumulator pressure means that a higher braking torque can be applied. Accordingly, it may be desirable maintain energy in the hydraulic accumulator such that a required braking torque can be achieved during the work cycle, otherwise braking will have to be performed using friction braking which involves energy losses.

The object is also achieved by a system according to claim 10.

According to a second aspect of the invention, there is provided a hybrid drive system for a working machine, the system comprising an internal combustion engine; a torque converter having an input shaft operatively coupled to the engine and an output shaft operatively coupled to a gearbox; an energy storage system operatively coupled to the gearbox for providing power to and receiving power from a drive shaft via the gearbox, the drive shaft being operatively coupled to propulsion means of the working machine; and work hydraulics operatively connected to the engine. The system further comprises an energy management control unit configured to: identify a repetitive loading cycle of the working machine; detect a bucket fill action in the repetitive loading cycle; and during the bucket fill action, discharge the energy storage system to provide a majority of the energy stored in the energy storage system to the drive shaft for vehicle propulsion during the bucket fill action.

According to one embodiment of the invention the energy storage system may be a hydraulic energy storage system comprising a hydraulic machine and at least one hydraulic accumulator operatively connected to the hydraulic machine.

According to one embodiment of the invention the hydraulic energy storage system may further comprise a valve arrangement connecting the at least one hydraulic accumulator to the hydraulic machine, wherein the hydraulic machine is a two quadrant hydraulic machine, and wherein the valve arrangement is configured to achieve four quadrant operation of the two quadrant hydraulic machine. Hereby, a two-quadrant pump, which is less complicated and less costly, is used together with a valve arrangement to achieve four quadrant operation. This means that the hydraulic accumulator can recuperate energy by producing a braking torque with the hydraulic machine while charging the accumulator with pressurized hydraulic fluid. It is of course also possible to use a four quadrant hydraulic machine, eliminating the need for the above described valve arrangement.

According to one embodiment of the invention, hydraulic energy storage system comprises a high-pressure hydraulic accumulator and a low-pressure hydraulic accumulator. The high-pressure hydraulic accumulator stores the energy to be provided to the drive shaft and the low-pressure hydraulic accumulator is used to supply the low-pressure side of the system with hydraulic fluid. Hereby, a closed-circuit quadrant hydraulic machine can be used.

According to one embodiment of the invention, the energy storage system may be an electrical energy storage system, for example comprising an electrical machine and an energy storage such as a battery. An electrical energy storage system may for example provide a higher efficiency, and an electrical energy storage system may also more easily be adapted to store a larger amount of energy. The energy storage system may also comprise a mechanical flywheel. A mechanical flywheel would in turn require a variable speed/torque conversion device between the flywheel and the gearbox.

Additional effects and features of this second aspect of the present invention are largely analogous to those described above in connection with the first aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic illustration of a wheel loader comprising a drive system according to an embodiment of the invention,
Fig. 2 is a flow chart outlining the general steps of a method according to an embodiment of the invention,
Fig. 3 is a schematic illustration of a drive system according to an embodiment of the invention,
Fig. 4 comprises graphs illustrating features of a method and a system according to an embodiment of the invention,
Fig. 5 comprises graphs illustrating features of a method and a system according to an embodiment of the invention;
Fig. 6 schematically illustrates features of a method and a system according to an embodiment of the invention;
Fig. 7 is a flow chart outlining the general steps of a method according to an embodiment of the invention;
Fig. 8 is a flow chart outlining the general steps of a method according to an embodiment of the invention; and
Fig. 9 is a flow chart outlining the general steps of a method according to an embodiment of the invention.

### DETAILED DESCRIPTION OF EXAMPLE EMBODIMENTS OF THE INVENTION

In the present detailed description, various embodiments of a drive system and a method for controlling a drive system according to the present invention are mainly discussed with reference to a hydraulic hybrid drive system in a wheel loader. It should be noted that this by no means limits the scope of the present invention which is equally applicable to electric hybrid drive systems, and that the invention also may be applicable for other types of working machines.

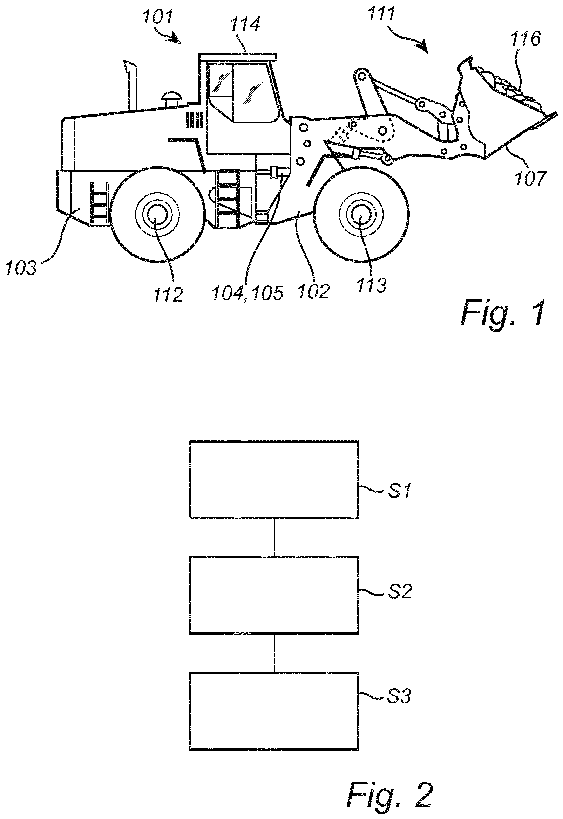

FIG. 1 shows a frame-steered working machine in the form of a wheel loader 101. The body of the wheel loader 101 comprises a front body section 102 and a rear body section 103, which sections each has an axle 112,113 for driving a pair of wheels. The rear body-section 103 comprises a cab 114. The body sections 102,103 are connected to each other in such a way that they can pivot in relation to each other around a vertical axis by means of two first actuators in the form of hydraulic cylinders 104,105 arranged between the two sections. The hydraulic cylinders 104,105 are thus arranged one on each side of a horizontal centerline of the vehicle in a vehicle traveling direction in order to turn the wheel loader 101.

The wheel loader 101 comprises an equipment 111 for handling objects or material. The equipment 111 comprises a load-arm unit 106, also referred to as a linkage, and an implement 107 in the form of a bucket fitted on the load-arm unit 106. A first end of the load-arm unit 106 is pivotally connected to the front vehicle section 102. The implement 107 is pivotally connected to a second end of the load-arm unit 106.

The load-arm unit 106 can be raised and lowered relative to the front section 102 of the vehicle by means of two second actuators in the form of two hydraulic cylinders 108, 109, each of which is connected at one end to the front vehicle section 102 and at the other end to the load-arm unit 106. The bucket 107 can be tilted relative to the load-arm unit 106 by means of a third actuator in the form of a hydraulic cylinder 110, which is connected at one end to the front vehicle section 102 and at the other end to the bucket 107 via a link-arm system 115.

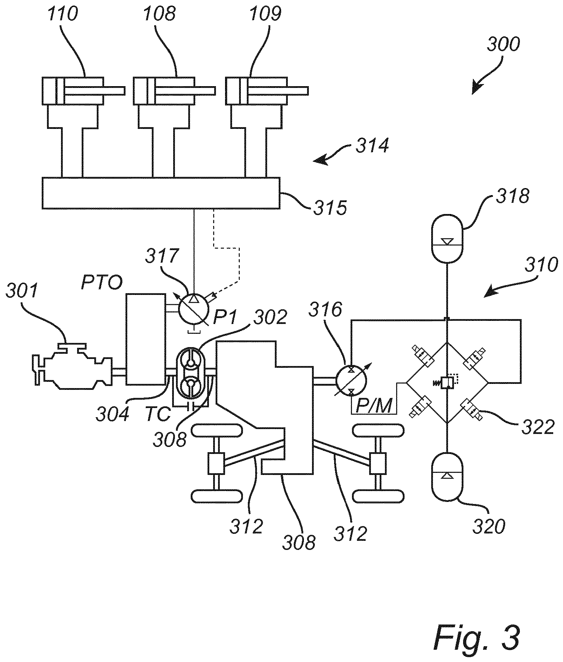

Fig. 2 is a flow chart outlining the steps of a method according to a method of the invention. The method will be described with further reference to the drive system 300 illustrated in Fig. 3.

The drive system 300 illustrated in Fig. 3 comprises an internal combustion engine 301 a torque converter 302 having an input shaft 304 operatively coupled to the engine 300 and an output shaft 306 operatively coupled to a gearbox 308. The illustrated drive system 300 can be referred to as a hybrid hydraulic drive system 300 since it comprises a second power source in addition to the combustion engine 301. The second power source is embodied by a hydraulic energy storage system 310 coupled to the gearbox 308 for providing power to a drive shaft 312 of the vehicle via the gearbox. The drive shaft 312 is in turn coupled to the rear and forwards axles 112,113 for providing vehicle propulsion by means of the wheels of the vehicle. Accordingly, the drive shaft 312 is operatively coupled to propulsion means of the vehicle. For a wheel loader, the propulsion means consist of wheels, but for other types of working machines such as excavators, the propulsion means may be tracks or other ground engaging elements.

Moreover, a hybrid drive system according to various embodiments of the invention may be arranged in many different ways as long as the hybrid drive system comprises a torque converter and a transmission, and that the energy storage system is operatively coupled to the transmission downstream of the torque converter.

The hybrid drive system 300 further comprises work hydraulics 314 operatively connected to the engine 300. The work hydraulics comprises the two hydraulic lift cylinders 108, 109, for lifting the linkage, the hydraulic tilt cylinder 110 for tilting the bucket 107, and a hydraulic valve arrangement 315 connecting the hydraulic cylinders 108, 109, 110 to a hydraulic machine 317. The hydraulic machine 317 is powered by a power take-off (PTO) 319 which is operatively coupled to the engine 301. It should be noted that the work hydraulics may be configured in many different ways as realized by the skilled person, and the described configuration merely illustrates an example configuration.

The drive system further comprises a drive system control unit (not shown). The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The control unit is connected to the various described features of the drive system 300 and is configured to control drive system parameters. Moreover, the control unit may be embodied by one or more control units, where each control unit may be either a general purpose control unit or a dedicated control unit for performing a specific function.

Accordingly, the drive system control unit is configured to control the drive system 300 to perform the steps of a control method. The method for controlling the drive system 300 comprises identifying S1 a repetitive loading cycle of the working machine, detecting S2 a bucket fill action in the repetitive loading cycle, and during the bucket fill action, discharging S3 the energy storage system 310 to provide a majority of the energy stored in the energy storage system 310 to the drive shaft 312 for vehicle propulsion.

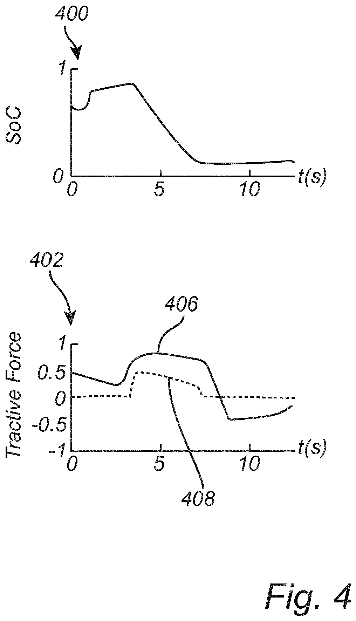

Fig. 4 comprises graphs illustrating the state of charge 400 of the energy storage system 310 and the tractive force 402 used by the working machine as a function of time during an action where the hydraulic drive system of a wheel loader comprising a hydraulic drive system 310 as described above is used. The state of charge (SoC) is normalized and the illustrated example is applicable both for a hydraulic and for an electric energy storage system. During a bucket fill action, the bucket 107 of the wheel loader 101 is being pushed into the material to be loaded, e.g. a pile of gravel. This in turn requires a high tractive force at a low vehicle speed, meaning that a high torque is required on the drive shaft 312 of the vehicle. Accordingly, the torque converter slip is high during the bucket fill action and it the energy storage system 310 is used to provide power to the drive shaft 312 for vehicle propulsion in order to reduce the energy losses in the torque converter 302. The SoC after discharge may advantageously be around 10%.

Graph 402 illustrates the total tractive force 406 used by the working machine and the force contribution 408 from the energy storage system 310.

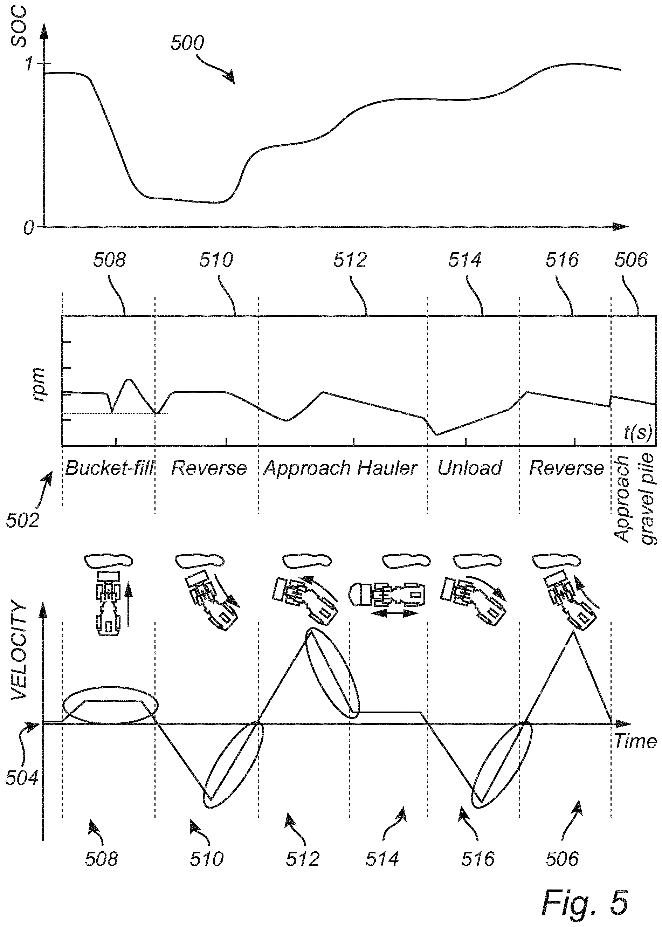

Fig. 5 comprises graphs illustrating an example work cycle of a wheel loader. Graph 500 outlines the state of charge of the energy storage system, 310, throughout an example work cycle, graph 502 illustrates the engine speed, i.e. the rpm of the combustion engine 301, and graph 504 illustrates the vehicle movement and velocity. The illustrated work cycle is a so called "short cycle loading" cycle, where the wheel loader loads material from a nearby location onto a hauler.

The loading work cycle of Fig. 5 comprises approaching 506 a gravel pile, filling 508 the bucket with gravel, reversing 310 the working machine to move away from the gravel pile, approaching 512 the hauler, unloading 514 the bucket into the hauler, reversing the working machine to move away from the hauler, and once again approaching 506 the gravel pile. The bucket fill action 508 comprises lowering the bucket 107 and driving the wheel loader 101 into the pile of material, thereby filling the bucket 107.

In graph 500 illustrating the state of charge, it can be seen that the energy storage system 310 is discharged during the bucket fill action as described above, and that it is primarily being charged during braking of the working machine when the working machine is braking in the approach to the hauler. In practice, charging may occur during all braking events of the work cycle, and the energy storage system may provide power for vehicle propulsion also during other actions besides the bucket fill action.

Graph 502 of Fig. 5 further includes a minimum required engine speed during the bucket fill action 508 to ensure that sufficient flow and torque can be provided to the work hydraulics by the engine 301.

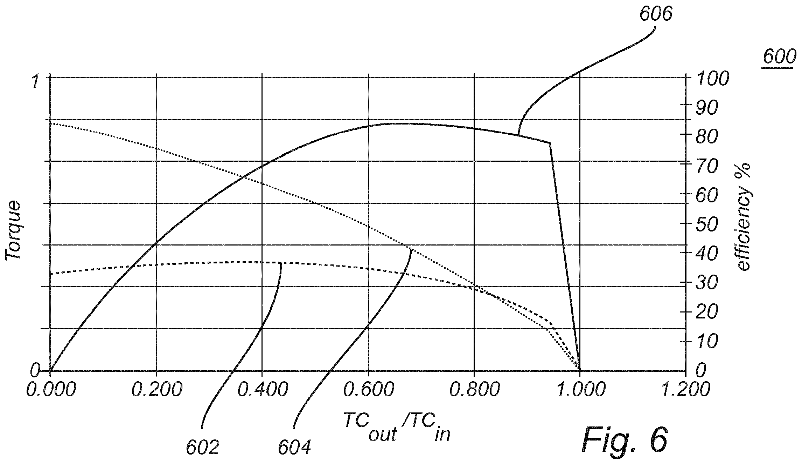

Fig. 6 is a graph 600 outlining the performance of the torque converter 320 as a function of the torque converter slip, TCₒᵤₜ/TCᵢₙ, where TCᵢₙ is the rotational speed of the input shaft 304 and TCₒᵤₜ is the rotational speed of the output shaft 306 of the torque converter. Accordingly, for TCₒᵤₜ/TCᵢₙ = 0, the output shaft of the torque converter is not moving and for TCₒᵤₜ/TCᵢₙ = 1 the input shaft 304 and output shaft 306 rotates with the same speed.

Curve 602 illustrates the torque on the input shaft 304 of the torque converter 320, which is the torque provided from the combustion engine 301. Curve 604 illustrates the output torque of the torque converter 320 and curve 606 schematically illustrates the efficiency of the torque converter 320. It can be assumed that the above described relations are known for a given torque converter or that they may be approximated to be used in the in various methods for controlling the drive system.

For a high torque converter slip, where TCₒᵤₜ/TCᵢₙ is close to zero, the output torque 604 from the torque converter at its maximum and the efficiency of the torque converter 320 is very low and it is thereby advantageous to provide power from the energy storage system to reduce energy losses in the torque converter 320 during such times that the torque converter 320 operates with low efficiency.

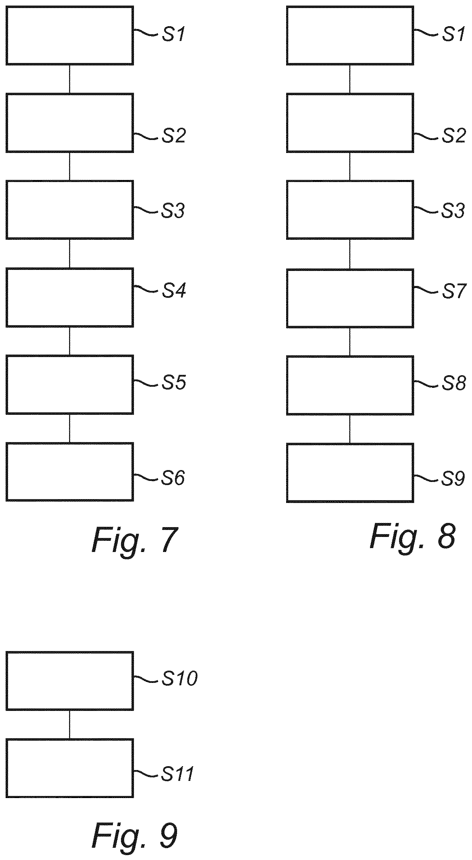

Fig. 7 is a flow chart outlining the general steps of a method according to an embodiment of the invention where the method comprises determining S4 that the working machine 101 is not in the repetitive-cycle loading operational mode; identifying S5 an action where a torque converter slip is higher than a predetermined threshold value; and providing S6 power from the energy storage system 310 to the drive shaft 312 for propulsion of the working machine during the identified action.

Fig. 8 is a flow chart outlining the general steps of a method according to an embodiment of the invention where the method comprises providing S7 power for vehicle propulsion based on a predetermined amount of energy to be provided from the energy storage system for vehicle propulsion; determining S8 a torque converter slip, and determining S9 an engine speed based on the torque converter slip such that the power from the engine and the power from the energy storage system equals the requested power for vehicle propulsion.

Fig. 9 is a flow chart outlining the general steps of a method according to an embodiment of the invention where the method comprises determining S10 a torque converter slip; and if the torque converter slip is above a predetermined threshold level, discharging S11 the energy storage system 310 to provide energy stored in the energy storage system to the drive shaft 312 for vehicle propulsion. The threshold value for the torque converter slip can for example be set based on the known properties of the torque converter illustrated in Fig. 6.

It is to be understood that the present invention is not limited to the embodiments described above and illustrated in the drawings; rather, the skilled person will recognize that many changes and modifications may be made within the scope of the appended claims.

## Claims

1. A method for controlling a hybrid drive system in a working machine (100), the system comprising:
an internal combustion engine (300);
a torque converter (302) having an input shaft (304) operatively coupled to the engine and an output shaft (306) operatively coupled to a gearbox (308);
an energy storage system (310) operatively coupled to the gearbox for providing power to and receiving power from a drive shaft (312) via the gearbox, said drive shaft being operatively coupled to propulsion means of the working machine, and
work hydraulics (314) operatively connected to the engine;
the method comprising:
identifying (S1) a repetitive loading cycle of the working machine;
detecting (S2) a bucket fill action in a repetitive loading cycle; and
the method being **characterized by,** during the bucket fill action, discharging (S3) the energy storage system to provide a majority of the energy stored in the energy storage system to the drive shaft (312) for vehicle propulsion.

2. The method according to claim 1, wherein the step of discharging (S3) the energy storage system comprises providing energy from the energy storage system for vehicle propulsion only during the bucket fill action.

3. The method according to claim 1, further comprising:
determining (S4) that the working machine is not in the repetitive-cycle loading operational mode;
identifying (S5) an action where a torque converter slip is higher than a predetermined threshold value; and
providing (S6) energy from the energy storage system to the drive shaft for propulsion of the working machine during said identified action.

4. The method according to claim 3, wherein the predetermined threshold value for the torque converter slip is 50%.

5. The method according to claim 1, further comprising:
providing (S7) energy for vehicle propulsion based on a predetermined amount of energy to be provided from the energy storage system for vehicle propulsion;
determining (S8) a torque converter slip,
and determining (S9) an engine speed based on the torque converter slip such that the power from the engine and the power from the energy storage system equals the requested power for vehicle propulsion.

6. The method according to claim 5, wherein the predetermined amount of energy to be provided from the energy storage system is the maximum available energy in the energy storage system.

7. The method according to claim 5 or 6, further comprising determining a required hydraulic fluid flow and output torque for the work hydraulics, determining a minimum required engine speed of the internal combustion engine for providing the required hydraulic fluid flow and output torque to the work hydraulics, and maintaining the engine speed above the determined minimum required engine speed.

8. The method according to any one of claims 1 to 5, wherein discharging the energy storage system comprises maintaining an amount of stored energy above a predetermined lower threshold value.

9. The method according to claim 8, wherein the predetermined lower threshold value is set based on an expected required braking torque during a remainder of the repetitive loading cycle, not including the bucket fill action.

10. A hybrid drive system for a working machine (100), the system comprising:
an internal combustion engine (300);
a torque converter (302) having an input shaft operatively coupled to the engine and an output shaft (306) operatively coupled to a gearbox (308);
an energy storage system (310) operatively coupled to the gearbox for providing power to and receiving power from a drive shaft via the gearbox, said drive shaft being operatively coupled to propulsion means of the working machine; and
work hydraulics (314) operatively connected to the engine;
the system **characterized by** further comprising an energy management control unit configured to:
identify a repetitive loading cycle of the working machine;
detect a bucket fill action in the repetitive loading cycle; and
during the bucket fill action, discharge the energy storage system to provide a majority of the energy stored in the energy storage system to the drive shaft (312) for vehicle propulsion during the bucket fill action.

11. The drive system according to claim 10, wherein the energy storage system is a hydraulic energy storage system comprising a hydraulic machine (316) and at least one hydraulic accumulator (318, 320) operatively connected to the hydraulic machine.

12. The drive system according to claim 11, wherein the hydraulic energy storage system further comprises a valve arrangement (322) connecting the at least one hydraulic accumulator to the hydraulic machine, wherein the hydraulic machine is a two quadrant hydraulic machine, and wherein the valve arrangement is configured to achieve four quadrant operation of the two quadrant hydraulic machine.

13. The drive system according to claim 11 or 12, wherein the hydraulic energy storage system comprises a high-pressure hydraulic accumulator (318) and a low-pressure hydraulic accumulator (320).

14. The drive system according to claim 10, wherein the energy storage system is an electrical energy storage system.

15. A working machine (100) comprising a drive system according to any one of claims 10 to 14.

## Patentansprüche

1. Verfahren zum Steuern eines Hybridantriebssystems in einer Arbeitsmaschine (100), wobei das System Folgendes umfasst:
einen Verbrennungsmotor (300);
einen Drehmomentwandler (302) mit einer Eingangswelle (304), die mit dem Motor wirkgekoppelt ist, und einer Ausgangswelle (306), die mit einem Getriebe (308) wirkgekoppelt ist;
ein Energiespeichersystem (310), das mit dem Getriebe wirkgekoppelt ist, um einer Antriebswelle (312) Leistung über das Getriebe bereitzustellen und diese von ihr aufzunehmen, wobei die Antriebswelle mit Antriebsmitteln der Arbeitsmaschine wirkgekoppelt ist, und
eine Arbeitshydraulik (314), die mit dem Motor wirkverbunden ist;
wobei das Verfahren Folgendes umfasst:
Identifizieren (S1) eines repetitiven Ladezyklus der Arbeitsmaschine;
Detektieren (S2) eines Schaufelfüllvorgangs in einem repetitiven Ladezyklus; und
das Verfahren **gekennzeichnet ist durch** das Entladen (S3) des Energiespeichersystems während des Schaufelfüllvorgangs, um einen Großteil der im Energiespeichersystem gespeicherten Energie an die Antriebswelle (312) für den Fahrzeugantrieb bereitzustellen.

2. Verfahren nach Anspruch 1, wobei der Schritt des Entladens (S3) des Energiespeichersystems das Bereitstellen von Energie von dem Energiespeichersystem für den Fahrzeugantrieb nur während des Schaufelfüllvorgangs umfasst.

3. Verfahren nach Anspruch 1, ferner umfassend:
Bestimmen (S4), dass die Arbeitsmaschine sich nicht im Betriebsmodus des repetitiven Ladezyklus befindet;
Identifizieren (S5) eines Vorgangs, bei dem ein Drehmomentwandlerschlupf höher als ein vorbestimmter Schwellenwert ist; und
Bereitstellen (S6) von Energie von dem Energiespeichersystem an die Antriebswelle zum Antrieb der Arbeitsmaschine während des identifizierten Vorgangs.

4. Verfahren nach Anspruch 3, wobei der vorbestimmte Schwellenwert für den Drehmomentwandlerschlupf 50 % ist.

5. Verfahren nach Anspruch 1, ferner umfassend:
Bereitstellen (S7) von Energie zum Fahrzeugantrieb basierend auf einer vorbestimmten Energiemenge, die von dem Energiespeichersystem zum Fahrzeugantrieb bereitzustellen ist;
Bestimmen (S8) eines Drehmomentwandlerschlupfs,
und Bestimmen (S9) einer Motordrehzahl basierend auf dem Drehmomentwandlerschlupf, so dass die Leistung vom Motor und die Leistung vom Energiespeichersystem gleich der angeforderten Leistung für den Fahrzeugantrieb sind.

6. Verfahren nach Anspruch 5, wobei die vorbestimmte, von dem Energiespeichersystem bereitzustellende Energiemenge die maximal verfügbare Energie im Energiespeichersystem ist.

7. Verfahren nach Anspruch 5 oder 6, ferner umfassend das Bestimmen eines erforderlichen Hydraulikflüssigkeitsflusses und Ausgangsdrehmoments für die Arbeitshydraulik, Bestimmen einer minimal erforderlichen Motordrehzahl des Verbrennungsmotors zum Bereitstellen des erforderlichen Hydraulikflüssigkeitsflusses und Ausgangsdrehmoments für die Arbeitshydraulik und Halten der Motordrehzahl über der bestimmten minimalen erforderlichen Motordrehzahl.

8. Verfahren nach einem der Ansprüche 1 bis 5, wobei das Entladen des Energiespeichersystems das Halten einer gespeicherten Energiemenge über einem vorbestimmten unteren Schwellenwert umfasst.

9. Verfahren nach Anspruch 8, wobei der vorbestimmte untere Schwellenwert basierend auf einem erwarteten erforderlichen Bremsdrehmoment während eines Rests des repetitiven Ladezyklus eingestellt wird, der den Schaufelfüllvorgang nicht umfasst.

10. Hybridantriebssystem für eine Arbeitsmaschine (100), wobei das System Folgendes umfasst:
einen Verbrennungsmotor (300);
einen Drehmomentwandler (302) mit einer Eingangswelle, die mit dem Motor wirkgekoppelt ist, und einer Ausgangswelle (306), die mit einem Getriebe (308) wirkgekoppelt ist;
ein Energiespeichersystem (310), das mit dem Getriebe wirkgekoppelt ist, um einer Antriebswelle Leistung über das Getriebe bereitzustellen und diese von ihr aufzunehmen, wobei die Antriebswelle mit Antriebsmitteln der Arbeitsmaschine wirkgekoppelt ist, und
eine Arbeitshydraulik (314), die mit dem Motor wirkverbunden ist;
wobei das System **dadurch gekennzeichnet ist, dass** es ferner eine Energiemanagement-Steuereinheit umfasst, die konfiguriert ist zum:
Identifizieren eines repetitiven Ladezyklus der Arbeitsmaschine;
Detektieren eines Schaufelfüllvorgangs in einem repetitiven Ladezyklus; und
Entladen des Energiespeichersystems während des Schaufelfüllvorgangs, um während des Schaufelfüllvorgangs einen Großteil der im Energiespeichersystem gespeicherten Energie an die Antriebswelle (312) für den Fahrzeugantrieb bereitzustellen.

11. Antriebssystem nach Anspruch 10, wobei das Energiespeichersystem ein hydraulisches Energiespeichersystem mit einer Hydraulikmaschine (316) und mindestens einem mit der Hydraulikmaschine wirkverbundenen Hydraulikspeicher (318, 320) ist.

12. Antriebssystem nach Anspruch 11, wobei das hydraulische Energiespeichersystem ferner eine Ventilanordnung (322) umfasst, die den mindestens einen Hydraulikspeicher mit der Hydraulikmaschine verbindet, wobei die Hydraulikmaschine eine Zweiquadranten-Hydraulikmaschine ist, und wobei die Ventilanordnung so konfiguriert ist, dass ein Vier-Quadranten-Betrieb der Zwei-Quadranten-Hydraulikmaschine erzielt wird.

13. Antriebssystem nach Anspruch 11 oder 12, wobei das hydraulische Energiespeichersystem einen Hochdruck-Hydraulikspeicher (318) und einen Niederdruck-Hydraulikspeicher (320) umfasst.

14. Antriebssystem nach Anspruch 10, wobei das Energiespeichersystem ein elektrisches Energiespeichersystem ist.

15. Arbeitsmaschine (100), umfassend ein Antriebssystem nach einem der Ansprüche 10 bis 14.

## Revendications

1. Procédé de commande d'un système d'entraînement hybride dans une machine de travail (100), ce système comprenant :
un moteur à combustion interne (300) ;
un convertisseur de couple (302) doté d'un arbre d'entrée (304) couplé fonctionnellement au moteur et d'un arbre de sortie (306) couplé fonctionnellement à une boîte de vitesses (308) ;
un système de stockage d'énergie (310) couplé fonctionnellement à la boîte de vitesses pour fournir à et recevoir de la part d'un arbre d'entraînement (312) du courant par l'intermédiaire de la boîte de vitesses, ledit arbre d'entraînement étant couplé fonctionnellement à un moyen de propulsion de la machine de travail, et
un système hydraulique de travail (314) couplé fonctionnellement au moteur ;
ce procédé comprenant :
l'identification (S1) d'un cycle de charge répétitif de la machine de travail ;
la détection (S2) d'une action de remplissage de seau dans un cycle de charge répétitif ; et
ce procédé étant **caractérisé par**, pendant l'action de remplissage de seau, le déchargement (S3) du système de stockage d'énergie pour fournir une majorité de l'énergie stockée dans le système de stockage d'énergie à l'arbre d'entraînement (312) pour la propulsion d'un véhicule.

2. Procédé selon la revendication 1, dans lequel l'étape de déchargement (S3) du système de stockage d'énergie comprend la fourniture d'énergie depuis le système de stockage d'énergie pour une propulsion de véhicule seulement pendant l'action de remplissage de seau.

3. Procédé selon la revendication 1, comprenant en outre :
la détermination (S4) que la machine de travail n'est pas dans le mode opérationnel de charge à cycle répétitif ;
l'identification (S5) d'une action où un glissement de convertisseur de couple est supérieur à une valeur seuil prédéterminée ; et
la fourniture (S6) d'énergie depuis le système de stockage d'énergie à l'arbre d'entraînement pour la propulsion de la machine de travail pendant ladite action identifiée.

4. Procédé selon la revendication 3, dans lequel la valeur seuil prédéterminée pour le glissement de convertisseur de couple est de 50 %.

5. Procédé selon la revendication 1, comprenant en outre :
la fourniture (S7) d'énergie pour la propulsion d'un véhicule en se basant sur une quantité prédéterminée d'énergie à fournir par le système de stockage d'énergie pour la propulsion du véhicule ;
la détermination (S8) d'un glissement de convertisseur de couple,
et la détermination (S9) d'une vitesse du moteur en se basant sur le glissement de convertisseur de courant de manière à ce que la puissance provenant du moteur et la puissance provenant du système de stockage d'énergie soient égales à la puissance requise pour la production du véhicule.

6. Procédé selon la revendication 5, dans lequel la quantité prédéterminée d'énergie à fournir par le système de stockage d'énergie est l'énergie disponible maximale dans le système de stockage d'énergie.

7. Procédé selon la revendication 5 ou 6, prenant en outre la détermination d'un flux de fluide hydraulique et d'un couple de sortie requis pour le système hydraulique de travail, la détermination d'une vitesse de moteur requise minimale du moteur à combustion interne pour fournir le flux de fluide hydraulique et le couple de sortie requis au système hydraulique de travail, et le maintien de la vitesse du moteur au-dessus de la vitesse de moteur requise minimale déterminée.

8. Procédé selon l'une quelconque des revendications 1 à 5, dans lequel le déchargement du système de stockage d'énergie comprend le maintien d'une quantité d'énergie stockée au-dessus d'une valeur seuil inférieure prédéterminée.

9. Procédé selon la revendication 8, dans lequel la valeur seuil inférieure prédéterminée est établie en se basant sur un couple de freinage requit attendu pendant un reste du cycle de charge répétitif n'incluant pas l'action de remplissage de seau.

10. Système d'entraînement hybride pour une machine de travail (100), ce système comprenant :
un moteur à combustion interne (300) ;
un convertisseur de couple (302) doté d'un arbre d'entrée (304) couplé fonctionnellement au moteur et d'un arbre de sortie (306) couplé fonctionnellement à une boîte de vitesses (308) ;
un système de stockage d'énergie (310) couplé fonctionnellement à la boîte de vitesses pour fournir à et recevoir de la part d'un arbre d'entraînement du courant par l'intermédiaire de la boîte de vitesses, ledit arbre d'entraînement étant couplé fonctionnellement à un moyen de propulsion de la machine de travail, et
un système hydraulique de travail (314) connecté fonctionnellement au moteur ;
ce système étant **caractérisé en ce qu'**il comprend en outre une unité de commande de gestion d'énergie configurée pour :
identifier un cycle de charge répétitif de la machine de travail ;
détecter une action de remplissage de seau dans un cycle de charge répétitif ; et
pendant l'action de remplissage de seau, décharger le système de stockage d'énergie pour fournir une majorité de l'énergie stockée dans le système de stockage d'énergie à l'arbre d'entraînement (312) pour la propulsion d'un véhicule pendant l'action de remplissage de seau.

11. Système d'entraînement selon la revendication 10, dans lequel le système de stockage d'énergie hydraulique est un système de stockage d'énergie comprenant une machine hydraulique (316) et au moins un accumulateur hydraulique (318, 320) couplé fonctionnellement à la machine hydraulique.

12. Système d'entraînement selon la revendication 11, dans lequel le système de stockage d'énergie hydraulique comprend un dispositif de vanne (322) connectée l'au moins un accumulateur hydraulique à la machine hydraulique, la machine hydraulique étend une machine hydraulique à deux quadrants, et le dispositif de vanne est configuré pour réaliser quatre opérations de quadrants de la machine hydraulique à deux quadrants.

13. Système d'entraînement selon la revendication 11 ou 12, dans lequel le système de stockage d'énergie hydraulique comprend un accumulateur hydraulique à haute pression (318) et un accumulateur hydraulique à basse pression (320).

14. Système d'entraînement selon la revendication 10, dans lequel le système de stockage d'énergie est un système de stockage d'énergie électrique.

15. Machine de travail (100) comprenant un système d'entraînement selon l'une quelconque des revendications 10 à 14.
